# EUROPÄISCHE PATENTANMELDUNG

(11) **EP 2 375 312 A2**
(43) Veröffentlichungstag der Anmeldung: **12.10.2011**
(21) Anmeldenummer: 10015776.7
(22) Anmeldetag: 17.12.2010
(51) Int. Cl.: G06F 3/023, G06F 3/03

(54) **Portabler Datenträger mit Eingabeeinrichtung**

(30) Priorität: 08.04.2010 DE 102010014169
(71) Anmelder: Giesecke & Devrient GmbH, 81677 München (DE)
(72) Erfinder: Baldischweiler, Michael, 81825 München (DE); Kalman, Cinkler, Dr., 80797 München (DE)

(57) **Zusammenfassung**

Ein portabler Datenträger (10; 10'; 10") umfasst eine Eingabeeinrichtung zum Eingeben von Zeichen. Diese Eingabeeinrichtung umfasst dazu ein verschiedene Zeichen (31; 31') umfassendes Zeichenfeld (30). Jedem Zeichen (31, 31') des Zeichenfeldes (30) ist erfindungsgemäß ein lichtempfindliches Sensorelement (51, 51') des Datenträgers (10; 10'; 10") zugeordnet. Der Datenträger (10; 10'; 10") ist eingerichtet, in einer mittels eines der Sensorelemente (51; 51') detektierten Reduktion des Lichteinfalls auf das Sensorelement (51; 51') eine Eingabe desjenigen Zeichens (31; 31') zu erkennen, welches dem Sensorelement (51; 51') zugeordnet ist.

## Beschreibung

Die vorliegende Erfindung betrifft einen portablen Datenträger mit einer Eingabeeinrichtung zum Eingeben von Eingabezeichen sowie ein Verfahren zum Eingeben von Eingabezeichen in einen solchen Datenträger.

Portable Datenträger, insbesondere Chipkarten, mit einer Eingabeeinrichtung sind bekannt. Diese dient beispielsweise zum Eingeben von Transaktionsdaten, z.B. im Rahmen einer Bezahltransaktion, oder solchen Daten, mit welchen sich ein Nutzer gegenüber dem Datenträger authentisiert.

Dabei ist eine Eingabeeinrichtung meist in Form einer Tastatur, beispielsweise einer Folientastatur, oder mittels einzelner Eingabeknöpfe, beispielsweise mittels eines Schnappschalters, realisiert. Alternativ sind, insbesondere bei Mobilfunkendgeräten, Smartphones und dergleichen, berührungsempfindliche Displays bekannt, welche in der Regel resistiv, kapazitiv oder induktiv gesteuert werden. Solche Eingabeeinrichtungen haben sämtlich den Nachteil, dass deren Herstellung, und somit die Herstellung des Datenträgers, durch die mechanische und/ oder elektronische Komplexität der Eingabeeinrichtung verteuert wird. Weiterhin sind viele der bekannten Eingabeeinrichtungen oftmals empfindlich gegenüber äußeren Einflüssen, insbesondere Umwelteinflüssen und Krafteinwirkungen auf den Datenträger.

Aufgabe der vorliegenden Erfindung ist es, das Eingeben von Daten in einen portablen Datenträger auf einfache und kostengünstige Weise zu ermöglichen.

Diese Aufgabe wird durch einen Datenträger und ein Verfahren mit den Merkmalen der unabhängigen Ansprüche gelöst. Vorteilhafte Ausgestaltungen und Weiterbildungen sind in den abhängigen Ansprüchen angegeben.

Ein erfindungsgemäßer portabler Datenträger umfasst eine Eingabeeinrichtung zum Eingeben von Zeichen. Diese Eingabeeinrichtung umfasst dazu ein verschiedene Zeichen umfassendes Zeichenfeld. Jedem Zeichen des Zeichenfeldes ist erfindungsgemäß ein lichtempfindliches Sensorelement des Datenträgers zugeordnet. Der Datenträger ist eingerichtet, in einer mittels eines der Sensorelemente detektierten Änderung des Lichteinfalls auf das Sensorelement eine Eingabe desjenigen Zeichens zu erkennen, welches dem Sensorelement zugeordnet ist.

Auf diese Weise kann eine Eingabeeinrichtung bereitgestellt werden, die im Wesentlichen wie eine gewöhnliche Tastatur eingesetzt werden kann. Der technische Aufwand zur Herstellung dieser Eingabeeinrichtung ist allerdings wesentlich geringer. Die Zeichen des Zeichenfeldes, welche das mögliche Eingabealphabet bereitstellen, können in bekannter und kostengünstiger Weise auf den Datenträger aufgebracht werden, beispielsweise aufgedruckt oder geprägt. Als optische Sensorelemente können einfache elektronische Bauteile zum Einsatz kommen. Diese sind kostengünstig, fertigungstechnisch einfach in einen Körper des Datenträgers zu integrieren und erfordern lediglich eine leitende Verbindung zu einer Steuereinheit des Datenträgers. Der mechanische und elektronische Aufwand zur Herstellung und Steuerung einer erfindungsgemäßen Eingabeeinrichtung ist somit minimal.

Ein erfindungsgemäßes Verfahren zum Eingeben von Zeichen in einen solchen Datenträger umfasst demnach f6lgendeSchritte: Jedem Zeichen des Zeichenfeldes des Datenträgers wird ein lichtempfindliches Sensorelement des Datenträgers eindeutig zugeordnet. Zum Eingeben eines Zeichens in den Datenträger wird dann der Lichteinfall auf dasjenige Sensorelement geändert, welches dem einzugebenden Zeichen zugeordnet ist. Dies kann beispielsweise dadurch geschehen, dass das Sensorelement mit einem Finger zeitweilig abgedeckt wird. Dadurch empfängt das Sensorelement kein oder nur noch sehr wenig Umgebungslicht. Das Sensorelement detektiert diese Reduktion des Lichteinfalls und der Datenträger erkennt in der Reduktion die Eingabe des Zeichens, welches dem Sensorelement zugeordnet worden ist. Bei entsprechender Anordnung kann ein aufgelegter Finger ebenso auch zu einem erhöhten Lichtfall, beispielsweise durch erhöhte Reflektion, führen.

Dieses Verfahren ermöglicht eine einfache und intuitive Eingabe beliebiger, auf dem Zeichenfeld vorhandener Zeichen als Eingabe in den Datenträger. Die Eingabeeinrichtung kann von einem Nutzer in der von Tastaturen oder anderen berührungsempfindlichen Eingabeeinrichtungen bekannten Weise verwendet werden.

Vorzugsweise sind die lichtempfindlichen Sensorelemente eingerichtet, gewöhnliches Tageslicht als Lichteinfall zu detektieren. Umgebungslicht, also beispielsweise Tageslicht oder entsprechende künstliche Beleuchtung, wird von den Sensorelementen in einer Intensität detektiert, welche deutlich von einer reduzierten Intensität unterschieden werden kann, die an einem Sensorelement detektiert wird, wenn dasselbe abgedeckt wird. D.h. der Datenträger kann in der beschriebenen Weise verwendet werden, wenn er nicht gesondert vor Umgebungslicht geschützt ist, beispielsweise in einer Hülle, einer Tasche oder einem Portemonnaie. Bei reduziertem Tageslicht ist, wie erwähnt, entsprechende künstliche Beleuchtung in der Regel ausreichend, um ein erfindungsgemäßes Betreiben der Eingabeeinrichtung des Datenträgers sicherzustellen:

Gemäß einer bevorzugten Ausführungsform umfasst der Datenträger zumindest ein Beleuchtungselement, welches auch zum zusätzlichen Beleuchten der Sensorelemente dienen kann. Auf diese Weise kann ohne Umgebungslicht oder eventuell unzureichende Umgebungsbeleuchtung ergänzt werden. Ein durch Betätigen der Eingabeeinrichtung geänderter Lichteinfall auf eines der Sensorelemente kann damit zuverlässiger erkannt werden. Fehler beim Erkennen einer Eingabe werden dadurch zumindest vermindert.

Eine besonders bevorzugte Ausführungsform des erfindungsgemäßen Datenträgers ümfasst zu jedem Sensorelement ein separates Beleuchtungselement, welches dem Sensorelement zugeordnet ist. Jedes einem Sensorelement zugeordnete Beleuchtungselement dient dann ausschließlich zum Beleuchten des zugeordneten Sensorelements. Vorzugsweise ist das einem Sensorelement zugeordnete Beleuchtungselement an der Oberfläche des Datenträgerkörpers im Wesentlichen direkt angrenzend an das Sensorelement angeordnet. Auf diese Weise kann die Eingabeeinrichtung sogar bei sehr wenig oder fehlendem Umgebungslicht betrieben werden.

Die Fehleranfälligkeit der Eingabeeinrichtung kann dadurch nochmals deutlich reduziert werden. Bei lediglich einem oder wenigen Beleuchtungselementen, die zum Beleuchten einer Mehrzahl von Sensorelementen vorgesehen sind, und deshalb räumlich zumindest von einigen der Sensorelemente beabstandet auf dem Datenträger angeordnet sein müssen, kann es zu Abschattungseffekten kommen. Die Beleuchtung eines ersten Sensorelements durch das eine der wenigen Beleuchtungselemente kann dabei zumindest teilweise beeinträchtigt werden, beispielsweise durch einen Finger des Nutzers, während dieser ein angrenzendes zweites Sensorelement abdeckt. Dabei kann das erste Sensorelement "irrtümlich"eine Reduktion des Lichteinfalls erkennen, obwohl beabsichtigt, wie erwähnt, ein benachbartes zweites Sensorelement abgedeckt worden ist. Ein solcher Fehler bei der Eingabe kann vermieden werden, wenn jeweils einem Sensorelement genau ein Beleuchtungselement zugeordnet wird.

Besonders bevorzugt sind die verschiedenen Beleuchtungselemente eingerichtet, die ihnen jeweils zugeordneten Sensorelemente individuell zu beleuchten. Eine individuelle Beleuchtung kann beispielsweise gemäß eines vorgegebenen Pulses erfolgen, d.h. das Beleuchtungselement leuchtet nicht andauernd, sondern gepulst, d.h. unterbrochen von zumindest kurzen Phasen des Nichtleuchtens. Eine andere Art, eine individuelle Beleuchtung bereitzustellen, liegt in der Farbe des Beleuchtungslichtes. Auf diese Weise kann ein Sensorelement noch genauer erkennen, ob es von dem ihm zugeordneten Sensorelement in der individuell vorgegebenen Weise beleuchtet wird. Eine Änderung der Beleuchtung der vorgegebenen, individuellen Art kann somit noch zielsicherer als Zeicheneingabe erkannt werden.

Auf diese Weise kann zusätzlich die Handhabung des Datenträgers vereinfacht werden. Verdeckt der Nutzer in dieser Ausführungsform ein zu betätigendes Sensorelement nicht vollständig, dafür aber zumindest das zugeordnete Beleuchtungselement, so kann eine Eingabe trotzdem fehlerfrei erkannt werden. Eventuell von dem nur partiell oder gar nicht abgedeckten Sensorelement detektierte Beleuchtung unterscheidet sich, beispielsweise in Puls oder Farbe, von der für das Sensorelement vorgesehenen individuellen Beleuchtung. Das Sensorelement betrachtet solche Streubeleuchtung anderer Beleuchtungselemente nicht. Zur Eingabe eines Zeichens kann in dieser Ausführungsform somit das dem Zeichen zugeordnete Sensorelement, das dem Sensorelement zugeordnete Beleuchtungselement oder beide abgedeckt werden.

Ein einem Sensorelement zugeordnetes Beleuchtungselement kann gleichzeitig als dem Zeichen des Zeichenfeldes zugeordnet angesehen werden, welches dem Sensorelement zugeordnet ist. Auf diese Weise kann der Datenträger auf einfache Weise - zusätzlich zu der Eingabeeinrichtung - eine Ausgabeeinrichtung zum Ausgeben von Zeichen bereitstellen. Ein Zeichen einer Ausgabe wird dabei dadurch angezeigt, dass das entsprechende Zeichen des Zeichenfeldes durch Beleuchten mittels des zugeordneten Beleuchtungselements gemäß einer vorgegebenen Kodierung angezeigt und dadurch ausgegeben wird. Eine solche Ausgabeeinrichtung, die keine weiteren technischen Anpassungen - außer einer geeigneten Ansteuerung der Beleuchtungselemente - erfordert, kann auf kostengünstige Weise ein einfaches Display des Datenträgers ersetzen. Die Ausgabeeinrichtung kann verschiedenen Zwecken dienen. Zum einen kann sie einem Nutzer mittels der Eingabeeinrichtung eingegebene Zeichen zur Kontrolle nochmals anzeigen. Dazu können eingegebenen Zeichen nach der Eingabe z.B. in der Reihenfolgen der Eingabe in der beschriebenen Weise beleuchtet werden. Zum anderen kann die Ausgabeeinrichtung dazu dienen, weitere Daten, beispielsweise Transaktionsdaten, Authentisierungsdaten und dergleichen, anzuzeigen, welche beim Betreiben des Datenträgers benötigt oder generiert werden.

Als Beleuchtungselemente werden vorzugsweise Leuchtdioden eingesetzt. Diese sind kostengünstig, ausfallsicher und einfach zu montieren. Andere Beleuchtungselemente sind gleichfalls möglich.

In einer weiteren Ausgestaltung kann ein Beleuchtungselement ein Sensorelement nacheinander mit Licht unterschiedlicher Farbe beleuchten. Dem Sensorelement können mehrere Eingabezeichen zugeordnet sein, die als Zeichen des Zeichenfeldes in den unterschiedlichen Farben dargestellt sind.

Wird in dem Sensorelement eine Änderung detektiert während das Beleuchtungselement mit einer der Farben leuchtet, so wird eine Eingabe des mit der entsprechenden Farbe im Zeichenfeld dargestellten Zeichens erkannt. Beispielsweise leuchtet das Beleuchtungselement zumindest zu einem ersten Zeitpunkt mit einer ersten Farbe und zu einem zweiten Zeitpunkt mit einer zweiten Farbe. Das Zeichenfeld umfasst zumindest zwei Zeichen, die dem gleichen Sensorelement zugeordnet sind. Das Erste der beiden Zeichen ist in der ersten Farbe dargestellt, das Zweite in der zweiten Farbe. Das Sensorelement detektiert eine Änderung, während das Beleuchtungselement mit der zweiten Farbe leuchtet, und erkennt somit eine Eingabe des zweiten Zeichens. Vorzugsweise erkennt das Sensorelement, mit welcher der möglichen Farben des Beleuchtungselements es gerade beleuchtet wird.

Gemäß einer weiteren bevorzugten Ausführungsform umfasst der erfindungsgemäße Datenträger eine Statusinformationseinrichtung. Diese ist eingerichtet, Statusinformationen bezüglich der Eingabe von Zeichen auszugeben. Solche Statusinformationen sind beispielsweise der mögliche Beginn einer Eingabe. Diese kann z.B. erfolgen, nachdem der Datenträger durch einen Selbsttest festgestellt hat, dass alle Sensorelemente einsatzbereit, d.h. insbesondere ausreichend beleuchtet, sind. Nach dem Eingeben eines Zeichens in der vorstehend beschriebenen Weise kann die Statusinformationseinrichtung eine Statusinformation ausgeben, welche das erfolgreiche Eingeben eines Zeichens bestätigt. Schließlich kann das Ende einer Eingabe als Statusinformation ausgegeben werden, beispielsweise wenn nach der Eingabe des letzten eingegebenen Zeichens eine gewisse Zeitspanne ohne Eingabe vergangen ist oder wenn eine vorgesehene Anzahl von Zeichen erfolgreich eingegeben worden ist. Weitere Statusinformationen sind Fehlermeldungen, wenn beispielsweise ein Sensorelement zu Beginn der Eingabe keine ausreichende Beleuchtung erkennt oder wenn bei der Eingabe mehr als ein Sensorelement eine Änderung des Lichteinfalls erkennt.

In dem Fall, dass der Datenträger auch eine Ausgabe von Zeichen in der vorstehend beschriebenen Weise unterstützt, kann die Statusinformationseinrichtung zusätzlich entsprechende Statusinformationen bezüglich der Ausgabe von Zeichen bereitstellen.

Die Statusinformationseinrichtung gibt die Statusinformation vorzugsweise optisch aus. Dazu können beispielsweise ein oder mehrere Leuchtdioden vorgesehen sein, welche z.B. linear oder in einem rechteckigen Matrixraster angeordnet sind. Auf diese Weise lassen sich verschiedenste Statusinformationen einfach und effektiv kodieren, beispielsweise Positionsinformationen über ein- oder ausgegebenen Zeichen oder über blockierte Sensorelemente. Es ist gleichfalls möglich, Statusinformationen akustisch wahrnehmbar auszugeben, beispielsweise mittels Pieptönen verschiedener Taktung oder Frequenz. Schließlich können auch Vibrationen des Datenträgers Statusinformationen kodieren.

Das Zeichenfeld des Datenträgers kann auf verschiedene Weise ausgebildet sein. Die Auswahl der Zeichen des Zeichenfeldes erfolgt nach den Erfordernissen der potentiell einzugebenden Zeichen, d.h. das Zeichenfeld umfasst vorzugsweise zumindest alle solchen Zeichen, die Bestandteil einzugebender Zeichenketten sein können. Gewöhnlich sind dies alphanumerische Zeichen. Darüber hinaus können weitere Zeichen vorgesehen sein. Vorzugsweise umfasst das Zeichenfeld ein die Ziffern 0 bis 9 umfassendes Ziffernfeld. Die Ziffern können dabei linear angeordnet sein. Eine lineare Anordnung der Ziffern macht das Zuordnen von Sensorelementen und gegebenenfalls Beleuchtungselementen zu den Zeichen einfach und eindeutig, indem die Sensorelemente bzw. Beleuchtungselemente, ebenfalls linear angeordnet, beispielsweise räumlich leicht versetzt, auf dem Datenträger angeordnet werden können. Das Ziffernfeld kann aber beispielsweise auch in Form eines geordneten Ziffernblocks, wie er z.B. von der Tastatur eines Mobilfunkendgeräts bekannt ist, angeordnet werden. Andere Arten der Anordnung der Zeichen des Zeichenfeldes, beispielsweise kreisförmig oder matrixförmig, sind möglich. Prinzipiell können die Zeichen des Zeichenfeldes sowie die den Zeichen jeweils zugeordneten Sensorelemente auf dem Datenträger an beliebigen Stellen angeordnet sein, solange eine Eingabe einzelner Zeichen wie vorstehend beschrieben möglich und für den Nutzer leicht und eindeutig durchführbar ist.

Der Datenträger umfasst vorzugsweise einen integrierten Schaltkreis oder mehrere einzelne Bauteile, welche entsprechende Aufgaben erfüllen. Der integrierte Schaltkreis ist eingerichtet, in beschriebener Weise eingegebene Zeichen zu verarbeiten. Der Schaltkreis ist weiterhin eingerichtet, falls Beleuchtungselemente vorgesehen sind, diese zu steuern. Schließlich kann der Schaltkreis eingerichtet sein, eine Ausgabe von Zeichen durch die Beleuchtungselemente in der vorstehend beschriebenen Weise zu steuern. Dabei werden in dem Schaltkreis auszugebende Daten erzeugt oder gespeichert, in Ausgabezeichen umgesetzt und über die Beleuchtung von Zeichen des Zeichenfeldes durch Beleuchtungselemente ausgegeben. In der Regel speichert ein Speicher des integrieren Schaltkreises eine Steuerapplikation, welche auf dem Schaltkreis zum Steuern der Eingabe und gegebenenfalls Ausgabe von Zeichen ausführbar ist.

Der Datenträger ist vorzugsweise eingerichtet zwischen einem ersten und einem zweiten Modus zur Erkennung umzuschalten. Dabei kann beispielsweise in einem Umgebungslichtmodus eine Reduzierung des Lichteinfalls als Eingabe erkannt und in einem Eigenlichtmodus die Erhöhung des Lichteinfalls als Eingabe erkannt werden. Wie aus dem folgenden Absatz deutlich wird, ist es bei entsprechender Ausgestaltung nötig die jeweils andere Art der Änderung (Reduzierung/Erhöhung) zu detektieren und als Eingabe zu erkennen.

Abhängig von der Führung des Umgebungs- und/oder des Eigenlichtes in dem Datenträger und/oder abhängig von der Ausgestaltung der Anordnung des Sensors und/ oder der Ausgestaltung der Datenträgeroberfläche kann anstatt einer Reduktion als Änderung auch eine Erhöhung des Lichteinfalls auftreten. Beispielsweise kann man anstatt das Umgebungslicht von der Oberseite des Datenträgers in den Sensor einfallen zu lassen, das Umgebungslicht auch von der Rückseite des Datenträgers einfallen und entsprechend eine erhöhte Reflektion als Eingabe erkennen. Das Eigenlicht und/ oder das Umgebungslicht kann auch quer zum Sensor und/ oder quer zur Hauptfläche des Datenträgers in den Bereich der Sensorelemente geleitet werden.

Entsprechend kann der Datenträger bevorzugt so ausgestaltet sein, dass die gleiche Art der Änderung (Erhöhung/Reduktion) des Lichteinfalls sowohl für Umgebungslicht als auch für Eigenlicht des Datenträgers als Eingabe erkannt werden kann.

Als lichtempfindliche Sensorelemente können verschiedene geeignete Bauteile eingesetzt werden, beispielsweise Fotodioden, Fototransistoren oder Solarzellen.

Ein erfindungsgemäßer Datenträger ist vorzugsweise in Form einer Chipkarte ausgebildet. Andere Bauformen sind ebenfalls möglich.

Die vorliegende Erfindung wird im Folgenden mit Bezug auf die anliegenden Zeichnungen beispielhaft beschrieben. Darin zeigen:
- Figur 1: eine erste bevorzugte Ausführungsformen eines erfindungsgemäßen Datenträgers;
- Figur 2: eine zweite bevorzugte Ausführungsformen eines erfindungsgemäßen Datenträgers und
- Figur 3: eine dritte bevorzugte Ausführungsformen eines erfindungsgemäßen Datenträgers.

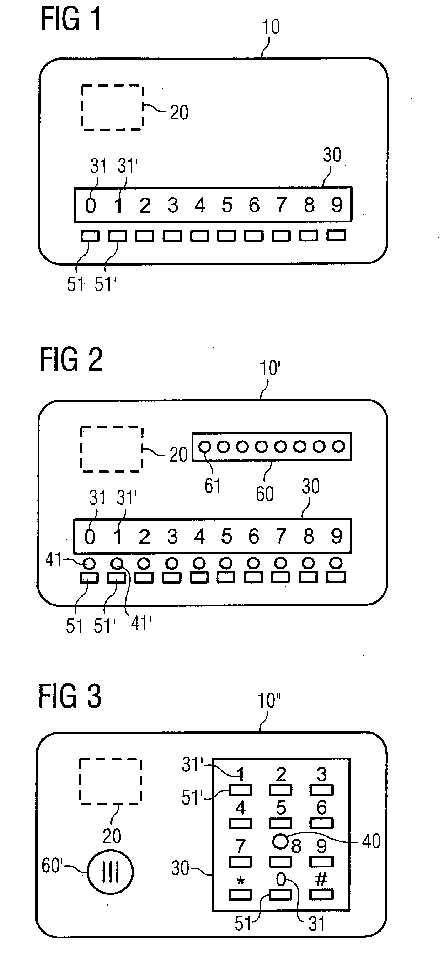

Mit Bezug auf die Figuren Fig.1, 2 und 3 umfasst ein portabler Datenträger 10,10',10", welcher hier exemplarisch jeweils als Chipkarte ausgebildet ist, einen - in den Figuren lediglich angedeuteten - in einen Kartenkörper eingebetteten integrierten Schaltkreis 20, ein Zeichenfeld 30, welches verschiedene Zeichen 31, 31' umfasst, sowie verschiedene Sensorelemente 51, 51'. Die Zeichen 30, 31 des Zeichenfeldes 30 bilden zusammen mit den den Zeichen 31, 31' jeweils zugeordneten Sensorelementen 51, 51', wie nachstehend detailliert beschrieben, eine Eingabeeinrichtung des Datenträgers 10.

Der Schaltkreis 20 umfasst (nicht separat gezeigt) einen ROM-Speicher, einen wiederbeschreibbaren FLASH- oder EEPROM-Speicher, einen flüchtigen RAM-Speicher sowie einen Prozessor. Der Datenträger 10,10',10" wird durch ein in dem ROM- oder FLASH-Speicher gespeichertes und auf dem Prozessor ausführbares Betriebssystem gesteuert. In dem FLASH-Speicher können weitere Daten gespeichert sein, beispielsweise als Transaktionsdaten gespeicherte Geheimdaten, z.B. eine PIN oder dergleichen, sowie auf dem Datenträger 10,10', 10" ausführbare Applikationen, beispielsweise eine Steuerapplikation zum Steuern der Eingabe von Zeichen in den Datenträger 10,10',10". Sofern der Datenträger 10',10" (vgl. Fig. 2,3) über Beleuchtungselemente 40, 41, 41' verfügt, können diese ebenfalls von der Steuerapplikation angesteuert werden. Diese kann weiterhin eingerichtet sein, wie nachfolgend mit Bezug auf Fig. 2 beschrieben, eine Ausgabe von Zeichen mit Hilfe der Beleuchtungselemente 41, 41' zu steuern. Schließlich kann die Steuerapplikation Statusinformationen bereitstellen, welche die Eingabe und gegebenenfalls die Ausgabe von Zeichen betreffen und welche mittels einer geeigneten, nachstehend beschriebenen Statusinformationseinrichtung 60, 60' (vgl. Fig. 2, 3) ausgegeben werden.

Der Datenträger 10,10', 10" wird über eine eigene, integrierte Energieversorgung in Form einer Batterie (nicht gezeigt) betrieben. Andere Arten der Energieversorgung,beispielsweise über eine Antenne oder dergleichen, sind möglich.

Abhängig davon, für welche Anwendung der Datenträger 10,10',10" vorgesehen ist, können durch den Datenträger 10,10', 10", neben der Eingabe und gegebenenfalls der Ausgabe von Zeichen, weitere Funktionalitäten bereitgestellt werden, beispielsweise als Kredit- oder Debitkarte, als Identitätsnachweis, als Zugangsberechtigung oder dergleichen. Dazu kann der Datenträger 10, 10', 10" weitere Komponenten umfassen. Zur kontaktlosen oder kontaktbehafteten Datenkommunikation können verschiedene Schnittstellen, beispielsweise ein Kontaktfeld oder eine Antenne, vorgesehen sein. Weiterhin kann eine Personalisierungsinformation, beispielsweise in Form des Namens des Nutzers des Datenträgers 10,10', 10", vorgesehen sein sowie weitere Informationen, die auf den Datenträgerkörper aufgebracht oder in einem Speicher des Datenträgers 10,10',10" gespeichert sind, beispielsweise über eine den Datenträger 10,10',10" ausgebende Stelle oder dergleichen.

Das Zeichenfeld 30 des Datenträgers 10, 10' (vgl. Fig.1, 2) ist als Ziffernfeld ausgebildet. Es umfasst die Ziffern "0" bis "9", welche linear aufsteigend angeordnet sind. Andere Anordnungen der Ziffern sind möglich. Die Anordnung der Zeichen 31, 31' des Zeichenfeldes 30 kann von einer linearen Anordnung abweichen. Möglich ist beispielsweise eine Anordnung in einem Kreis oder, wie mit Bezug auf den Datenträger 10" in Fig. 3 dargestellt, als Zeichenfeld 30 in Form eines geordneten Ziffernblocks. Dieser umfasst außer den Ziffern "0" bis "9" noch die Sonderzeichen "*" und "#".

Wesentlich ist, dass das Zeichenfeld 30 zumindest diejenigen Zeichen 31, 31' umfasst, die als Zeichen in den Datenträger 10,10', 10" eingegeben werden sollen. In der Regel sind dies die Ziffern "0" bis "9", aber auch Buchstaben oder in seltenen Fällen Sonderzeichen, können bedarfsweise vom Zeichenfeld 30 umfasst sein.

Die Zeichen 31, 31' des Zeichenfeldes 30 werden in konventioneller Weise unveränderbar auf den Datenträger 10,10', 10" aufgebracht, beispielsweise aufgedruckt, eingeprägt, mittels Laser eingeschrieben oder dergleichen.

Jedem Zeichen 31, 31' des Zeichenfeldes 30 ist ein Sensorelement 51, 51' eindeutig zugeordnet. In den gezeigten Beispielen liegt ein einem Zeichen 31 zugeordnetes Sensorelement 51 in dem Datenträger 10,10', 10" nahezu direkt angrenzend an das jeweilige Zeichen 31, beispielsweise (fast) direkt unterhalb. Wichtig ist dabei lediglich, dass die entsprechende Zuordnung eines Sensorselements 51 zu einem Zeichen 31 eindeutig und leicht erkennbar ist. Beleuchtungselemente 40, 41, 41' sind derart optisch hervorhebbar ausgebildet, dass ein Beleuchtungselement, wenn aktiviert, zumindest einen Bereich der Datenträgeroberfläche in seiner Umgebung beleuchten kann. Die Beleuchtungselemente 40, 41, 41' dienen insbesondere dazu, wie nachstehend detailliert beschrieben, die Sensorelemente 51, 51' zu beleuchten. Im Körper des Datenträgers 10',10" sind ein Beleuchtungselement 40, 41, 41' und ein angrenzendes Sensorelement 51, 51' durch eine lichtdichte Trennwand (nicht gezeigt) getrennt. Damit wird verhindert, dass ein Sensorelement 51, 51' einen Lichteinfall registriert, der von durch das Beleuchtungselement 40, 41, 41' ausgesendetem. Licht resultiert, welches sich in dem eventuell für das Licht zumindest teilweise durchlässigen Kartenkörper ausbreitet. D.h. ein Sensorelement 51, 51' soll lediglich solches Licht eines Beleuchtungselements 40, 41, 41' detektieren, welches sich außerhalb des Datenträgerkörpers ausbreitet.

Alternativ kann aber auch vorgesehen sein, dass die Sensorelemente 51, 51' zum einen auf eine Beleuchtung durch diesen jeweils zugeordnete Beleuchtungselemente 41, 41' angewiesen sind, d.h., dass gewöhnliches Umgebungslicht zur Beleuchtung nicht ausreicht. Dann können, zum anderen, die Beleuchtungselemente 41, 41' technisch derart ausgebildet werden, dass ein Druck von außen auf ein Beleuchtungselement 41 den Lichteinfall auf das zugeordnete Sensorelement 51 unterbricht. Dies ist beispielsweise der Fall, wenn das Beleuchtungselement 41 eine Leuchtdiode ist, welche mit einer speziellen Deckschicht mit Prismen- oder Linseneigenschaft ausgestattet ist, wobei sich diese Eigenschaft bei Druck auf die Deckschicht derart verändert, dass der Lichteinfall auf das Sensorelement 51 unterbrochen wird.

Eine Steuerapplikation des Datenträgers 10,10',10", beispielsweise als Komponente des Betriebssystems, ist eingerichtet, ein oder mehrere der Beleuchtungselemente 40, 41, 41' in vorgegebener Weise temporär zum Leuchten zu bringen. Die Beleuchtungselemente 40, 41, 41' sind in den gezeigten Beispielen als Leuchtdioden ausgebildet, welche teilweise in den Datenträgerkörper integriert sind und von der Steuerapplikation gesteuert werden. Die Leuchtdioden können Licht emittieren, bedarfsweise in jeweils verschiedenen Farben, welches an den jeweiligen Positionen die umgebende Datenträgeroberfläche beleuchtet.

Die Datenträger 10',10" umfassen weiterhin eine Statusinformationseinrichtung 60, 60'. Diese dient in beiden Fällen dazu, zusätzliche Statusinformation betreffend die Eingabe von Zeichen in den Datenträger 10',10" und gegebenenfalls die Ausgabe von Zeichen durch den Datenträger 10', 10" bereitzustellen. Beispiele für entsprechende Statusinformationen und deren Ausgabe werden nachfolgend mit Bezug auf eine Beschreibung der Eingabe von Daten in den Datenträger 10',10" gegeben.

Eine Statusinformation kann auf beliebige geeignete Weise dargestellt und wahrnehmbar gemacht werden. Neben nachfolgend beschriebener optisch (vgl. Fig. 2) oder akustisch (vgl. Fig. 3) wahrnehmbarer Statusinformation ist es möglich, Statusinformation auch derart auszugeben, dass sie durch den Tastsinn wahrnehmbar ist, beispielsweise indem der Datenträger, um eine Information auszugeben, temporär vibriert.

Die Statusinformationseinrichtung 60 des Datenträgers 10' in Fig. 2 ist als Positionsfeld ausgebildet. Dieses umfasst acht Positionselemente 61, welche - wie die Beleuchtungselemente 40, 41, 41' - mittels Leuchtdioden optisch hervorgehoben werden können. Wie nachstehend beschrieben, dient diese Art der Statusinformationseinrichtung 60 dazu, beim Eingeben (oder Ausgeben) eines Zeichens 31 gleichzeitig anzugeben, an welcher Position dieses Zeichen 31 innerhalb einer einzugeben (oder auszugebenden) - hier maximal achtstelligen - Zeichenkette anzuordnen ist. Eine einfachere (nicht gezeigte) Ausführungsform einer optischen Statusinformationseinrichtung könnte lediglich ein Feld umfassen, welches von der Steuerapplikation gesteuert, in vorgegebener Weise temporär hervorgehoben werden könnte, d.h. leuchtete.

Eine ähnliche, eingeschränkte Funktionalität stellt die Statusinformationseinrichtung 60' des Datenträgers 10" aus Fig. 3 bereit. Diese umfasst ein akustisches Bauteil, welches eingerichtet ist, einfache Töne variabler Länge auszugeben. Ein ausgegebener Ton einer gewissen Länge kann gleich einem entsprechend lange optisch hervorgehobenen Feld interpretiert werden. Ausgabe verschiedener Töne kann ebenfalls vorgesehen sein.

Die Zuordnung jeweils eines Zeichens 31, 31' des Zeichenfeldes 30 zu einem Sensorelement 51, 51' dient der Eingabe von Zeichen in den Datenträger 10, 10',10". Jedes optische Sensorelement 51 ist mit dem Schaltkreis 20 verbunden. Dort kann festgestellt werden, wenn ein Sensorelement 51 eine Reduktion des Lichteinfalls auf das Sensorelement 51 detektiert. Eine solche Reduktion des Lichteinfalls wird als Eingabe des dem Sensorelement 51 zugeordneten Zeichens 31 gewertet. Auf diese einfache Weise kann bereits eine Eingabe von Zeichen in den Datenträger 10,10', 10" durchgeführt werden.

Ein lichtempfindliches Sensorelement 51, beispielsweise eine Fotodiode, ein Fototransistor oder eine Solarzelle, ist vorzugsweise derart eingerichtet, dass eine Beleuchtung der Datenträgeroberfläche, beispielsweise durch gewöhnliches Tageslicht oder entsprechende künstliche Beleuchtung, ausreicht, um das Sensorelement 51 derart zu beleuchten, dass es eine Reduktion des Lichteinfalls auf das Sensorelement 51, wenn diese z.B. mit einem Finger abgedeckt wird, eindeutig detektiert werden kann.

Um ein Detektieren einer Reduktion des Lichteinfalls auf ein Sensorelement 51 zu erleichtern bzw. zuverlässiger durchführen zu können, sind die Datenträger 10',10" gemäß den Figuren 2 und 3 zusätzlich mit beschriebenen Beleuchtungselementen 40, 41, 41' ausgestattet. Der Datenträger 10" aus Fig. 3 umfasst lediglich ein Beleuchtungselement 40, welches in der Mitte des Ziffernblocks 30 angeordnet ist und dazu dient, sämtliche Sensorelemente 51, 51' - zusätzlich zu dem vorhandenen Umgebungslicht - zu beleuchten. In dem Datenträger 10' aus Fig. 2 ist eine Mehrzahl von Beleuchtungselementen 41, 41' vorgesehen. Jedes dieser Beleuchtungselemente 41, 41' ist genau einem Sensorelement 51, 51' - und damit ebenso genau einem Zeichen 31, 31' - zugeordnet. Ein Sensorelement 51 wird dabei ausschließlich durch das dem Sensorelement 51 zugeordnete Beleuchtungselement 41 beleuchtet. In einer solchen Ausführungsform kann auf sonstiges Umgebungslicht im Wesentlichen verzichtet werden.

Es ist möglich, die Beleuchtung für jedes Sensorelement 51 individuell auszugestalten. D.h. jedes Sensorelement 51 wird durch das diesem Sensorelement 51 zugeordnete Beleuchtungselement 41 in vorgegebener, individueller Weise beleuchtet, wobei sich die Beleuchtung von der Beleuchtung eines anderen Sensorelements 51' in - zumindest für die Steuerapplikation - erkennbarer Weise unterscheidet. Unterschiede können beispielsweise in der Farbe der Beleuchtung bestehen. Weiterhin kann ein Beleuchtungselement 41 gepulst leuchten, wobei der vorgegebene Puls, d.h. das Muster, gemäß dem sich Leuchten und Nichtleuchten des Beleuchtungselements 41 abwechseln, das Individualisierungsmerkmal bildet. In dieser Ausführungsform kann zum Bewirken einer Eingabe eines Zeichens statt des Sensorelements 51 auch lediglich das zugeordnete Beleuchtungselement 41 abgedeckt werden, sodass das Sensorelement 51 - bzw. die mit den Sensorelement 51 verbundene Steuerapplikation - in jedem Fall eine Reduktion des für dieses Sensorelement 51 individuellen Lichteinfalls erkennt.

Mit Bezug auf die Datenträger 10', 10" in den Fig. 2 und 3 werden im Folgenden die Schritte eines Verfahrens zum Eingeben einer Zeichenkette, beispielsweise zum Authentisieren eines Nutzers gegenüber dem Datenträger 10', 10", exemplarisch beschrieben.

Der Datenträger 10', 10" zeigt in einem ersten Schritt durch eine Statusinformation an, dass eine Prüfung der Sensorelemente 51, 51' durchgeführt wird. Eine solche Statusinformation kann durch den Datenträger 10' durch Aufleuchten einiger Leuchtdioden 61 des Positionsfeldes 60 nach einem vorgegebenen Muster, beim Datenträger 10" durch Ausgabe eines Pieptons vorgegebener Länge durch den Lautsprecher 60' erfolgen.

Während der Prüfung der Sensorelemente 51, 51' wird durch die Steuerapplikation des Datenträgers 10', 10" geprüft, ob alle Sensorelemente 51, 51' in vorgesehener Weise beleuchtet sind. Im gezeigten Fall erfolgt die Beleuchtung - neben einer Beleuchtung durch vorhandenes Umgebungslicht - zusätzlich durch die Beleuchtungselemente 40 (Fig. 3) bzw. 41. 41' (Fig. 2). Eventuelle Verschmutzungen oder versehentliche Abdeckungen der Sensorelemente 51, 51' können in diesem Schritt erkannt und, falls vorhanden und durch eine weitere Statusinformation durch die Statusinformationseinrichtung 60, 60' geeignet ausgegeben, behoben werden. Die Betriebsbereitschaft des Datenträgers 10', 10" nach erfolgreicher Prüfung kann ebenso durch eine geeignete Statusinformation ausgegeben werden.

Es folgt die Eingabe der Eingabezeichenkette. Dazu deckt der Nutzer - Zeichen für Zeichen - dasjenige Sensorelement 51 ab, welches dem jeweils einzugebenden Zeichen zugeordnet ist. Soll beispielsweise als erstes Zeichen eine "0" eingegeben werden, deckt der Nutzer, z.B. mit einem Finger, das der "0" zugeordnete Sensorelement 51 temporär ab. Der Datenträger 10',10" kann mittels einer Statusinformation ausgeben, dass die Eingabe, und bereits der Versuch der Eingabe, als solche erkannt werden. Dazu kann beispielsweise das erste Feld 61 des Positionsfeldes 60 mit steigender Frequenz pulsierend leuchten. Damit zeigt der Datenträger 10' an, dass eine Reduktion des Lichteinfalls auf das Sensorelement 51, welches dem Zeichen "0" entspricht, detektiert wird. Der Nutzer kann diese Statusinformation nutzen, um festzustellen, dass der Datenträger 10' die gewünschte Eingabe korrekt erkennt. Durch ein kurzzeitiges, dauerhaftes Leuchten des ersten Feldes 61 des Positionsfeldes 60 gibt der Datenträger schließlich die Statusinformation aus, dass er die Eingabe der "0" als erstes Zeichen akzeptiert hat. Ist die Eingabe des Nutzers hingegen nicht eindeutig, wenn beispielsweise mehr als ein Sensorelement 51, 51' zumindest partiell abgedeckt werden, meldet die Steuerapplikation des Datenträgers 10' dies dem Nutzer ebenfalls über eine geeignete Statusinformation zurück, beispielsweise, indem das Feld 61 nicht ansteigend mit einer schnelleren Frequenz pulsiert, sondern sich die Frequenz wieder verlangsamt. Mit Bezug auf den Datenträger 10" können die jeweiligen Statusinformationen natürlich auch akustisch, mit vorgegebener geeigneter Kodierung, ausgegeben werden.

Die Eingabe aller weiteren Zeichen verläuft analog. Das Ende der Eingabe kann der Datenträger 10',10" auf verschiedene Weise erkennen. In einigen Fällen wird die Länge der Eingabezeichenkette, beispielsweise eines Passwortes, der Steuerapplikation des Datenträgers 10', 10" bekannt sein. In anderen Fällen kann es vorgesehen sein, dass der Datenträger 10', 10" von einem Ende einer Eingabe ausgeht, wenn eine gewisse Zeitspanne seit der Eingabe des letzten Zeichens vergangen ist. Schließlich kann eine spezielle Aktion des Nutzers vorgesehen sein, um das Ende der gewöhnlichen Eingabe an den Datenträger 10',10" zu melden. Diese Aktion kann z.B. die Eingabe eines Sonderzeichens (vgl. Fig. 3), z.B. "*" oder "#" sein, oder aber das gleichzeitige Betätigen, d.h. Abdecken zweier vorgegebener, vorzugsweise nicht benachbarter Sensorelemente. Erkennt der Datenträger 10, 10' das Ende der Eingabe, kann dies wieder mittels einer kurzen Statusinformation zurückgemeldet werden.

Verfügt der Datenträger 10', wie in Fig. 2 gezeigt, über jeweils jedem Zeichen 31, 31' des Zeichenfeldes 30 zugeordnete Beleuchtungselemente 41, 41', so kann zur Kontrolle die eingegebene Zeichenkette nochmals ausgegeben werden. Die Kodierung dieser Ausgabe kann auf verschiedene Arten erfolgen. Im einfachsten Fall, bei einer kurzen auszugebenden Zeichenkette, welche aus paarweise verschiedenen Zeichen besteht, können diese Zeichen 31, 31' alle gleichzeitig durch die jeweils zugeordneten Beleuchtungselemente 41, 41' angezeigt werden. Alternativ können die Zeichen 31, 31' in der Reihenfolge ihrer Eingabe nacheinander beleuchtet werden. Das Positionsfeld 60 kann ergänzende Informationen ausgeben, beispielsweise indem jeweils beim Beleuchten einer Ziffer 31 durch ein Beleuchtungselement 41 in dem Positionsfeld 60 das Feld derjenigen Position aufleuchtet, welche das aktuell ausgegebene Zeichen 31 in der Eingabezeichenkette eingenommen hat. Auch diese Ausgabe kann durch den Nutzer in beschriebener Weise bestätigt werden.

## Patentansprüche

1. Portabler Datenträger (10; 10'; 10") mit einer Eingabeeinrichtung zum Eingeben von Zeichen, **dadurch gekennzeichnet, dass** jedem Zeichen (31; 31') eines Zeichenfeldes (30) des Datenträgers (10; 10'; 10") ein lichtempfindliches Sensorelement (51; 51') des Datenträgers (10; 10'; 10") zugeordnet ist und der Datenträger (10; 10'; 10") eingerichtet ist, in einer mittels eines der Sensorelemente (51; 51') detektierten Änderung des Lichteinfalls auf das Sensorelement (51; 51') eine Eingabe desjenigen Zeichens zu erkennen, welches dem Sensorelement (51; 51') zugeordnet ist.

2. Datenträger (10; 10'; 10") nach Anspruch 1, **dadurch gekennzeichnet, dass** die Sensorelemente (51; 51') eingerichtet sind, gewöhnliches Tageslicht oder entsprechende künstliche Beleuchtung als Lichteinfall zu detektieren.

3. Datenträger (10; 10'; 10") nach Anspruch 1 oder 2, **gekennzeichnet durch** zumindest ein Beleuchtungselement (40; 41; 41') zum Beleuchten der Sensorelemente (51; 51').

4. Datenträger (10; 10'; 10") nach Anspruch 3, **dadurch gekennzeichnet, dass** jedem Sensorelement (51; 51') genau ein Beleuchtungselement (41; 41') zum Beleuchten des Sensorelements (51; 51') zugeordnet ist.

5. Datenträger (10; 10'; 10") nach Anspruch 4, **dadurch gekennzeichnet, dass** jedes der Beleuchtungselemente (41; 41') eingerichtet ist, das zugeordnete Sensorelement (51; 51') individuell, insbesondere gemäß eines vorgegebenen Pulses oder mit einer vorgegebenen Farbe, zu beleuchten.

6. Datenträger (10; 10'; 10") nach Anspruch 4 oder 5, **dadurch gekennzeichnet, dass** ein einem Sensorelement (51; 51') zugeordnetes Beleuchtungselement (41; 41') gleichfalls dem dem Sensorelement (51; 51') zugeordneten Zeichen (31; 31') des Zeichenfeldes (30) zugeordnet ist und der Datenträger (10; 10'; 10") eingerichtet ist, Zeichen einer Ausgabe dadurch anzuzeigen, dass Zeichen (31; 31') des Zeichenfeldes (30) durch Beleuchten mittels des zugeordneten Beleuchtungselements (41; 41') gemäß einer vorgegebenen Kodierung angezeigt und dadurch ausgegeben werden.

7. Datenträger (10; 10'; 10") nach einem der Ansprüche 3 bis 6, **dadurch gekennzeichnet, dass** das zumindest eine Beleuchtungselement (40; 41; 41') als Leuchtdiode ausgebildet ist.

8. Datenträger (10; 10'; 10") nach einem der Ansprüche 1 bis 7, **gekennzeichnet durch** eineStatusinformationseinrichtung (60; 60'), welche eingerichtet ist, eine Statusinformation bezüglich der Eingabe von Zeichen auszugeben.

9. Datenträger (10; 10'; 10") nach Anspruch 8, **dadurch gekennzeichnet, dass** die Statusinformationseinrichtung (60; 60') eingerichtet ist, die Statusinformation optisch, vorzugsweise mittels Leuchtdioden, oder akustisch wahrnehmbar auszugeben.

10. Datenträger (10; 10'; 10") nach einem der Ansprüche 1 bis 9, **dadurch gekennzeichnet, dass** das Zeichenfeld (30) als Ziffernfeld umfassend die Ziffern 0 bis 9 ausgebildet ist, wobei die Ziffern linear oder in Form eines Ziffernblocks angeordnet sind.

11. Datenträger (10; 10'; 10") nach einem der Ansprüche 1 bis 10, **gekennzeichnet durch** einen integrierten Schaltkreis (20), welcher eingerichtet ist, eingegebene Zeichen zu verarbeiten.

12. Datenträger (10; 10'; 10") nach Anspruch 11 mit 3 oder 6, **dadurch gekennzeichnet, dass** der integrierte Schaltkreis (20) eingerichtet ist, das Beleuchten durch die Beleuchtungselemente (40; 41; 41') zu steuern oder eingerichtet ist, den Ausgabezeichen entsprechende Ausgabedaten zu erzeugen und/oder zu speichern sowie das Anzeigen der Ausgabezeichen zu steuern.

13. Datenträger (10; 10'; 10") nach einem der Ansprüche 1 bis 12, **dadurch gekennzeichnet, dass** die Sensorelemente (51; 51') als Fotodioden oder Fototransistor oder Solarzellen ausgebildet sind.

14. Verfahren zum Eingeben von Zeichen in einen portablen Datenträger (10; 10'; 10"), **dadurch gekennzeichnet, dass** jedem Zeichen (31; 31') eines Zeichenfeldes (30) des Datenträgers (10; 10'; 10") ein lichtempfindliches Sensorelement (51; 51') des Datenträgers (10; 10'; 10") zugeordnet wird und zum Eingeben eines Zeichens der Lichteinfall auf dasjenige Sensorelement (51; 51') reduziert wird, welches dem Zeichen (31; 31') zugeordnet worden ist, wobei der Datenträger (10; 10'; 10") die mittels des Sensorelements (51; 51') detektierte Änderung des Lichteinfalls auf das Sensorelement (51; 51') als eine Eingabe des dem Sensorelement (51; 51') zugeordneten Zeichens (31; 31') erkennt.

15. Verfahren nach Anspruch 14, **dadurch gekennzeichnet, dass** die Sensorelemente (51; 51') mittels zumindest eines Beleuchtungselements (40; 41; 41') des Datenträgers (10; 10'; 10") beleuchtet werden, um eine Änderung des Lichteinfalls auf ein Sensorelement (51; 51') zuverlässiger detektieren zu können.

16. Verfahren nach Anspruch 15, **dadurch gekennzeichnet, dass** jedes Sensorelement (51; 51') durch ein dem Sensorelement (51; 51') zugeordnetes Beleuchtungselement (41; 41') beleuchtet wird.

17. Verfahren nach Anspruch 16, **dadurch gekennzeichnet, dass** jedes Sensorelement (51; 51') von dem dem Sensorelement (51; 51') jeweils zugeordneten Beleuchtungselement (41; 41') individuell, insbesondere gemäß eines vorgegebenen Pulses oder mit einer vorgegebenen Farbe, beleuchtet wird.

18. Verfahren nach einem der Ansprüche 14 bis 17, **dadurch gekennzeichnet, dass** eine Statusinformationseinrichtung (60; 60') Statusinformationen bezüglich der Eingabe, insbesondere über einen Beginn und ein Ende einer Eingabe sowie eine erfolgreiche Eingabe eines einzelnen Eingabezeichens, ausgibt.
